# EUROPÄISCHE PATENTSCHRIFT

(11) **EP 0 314 123 B1**
(45) Veröffentlichungstag und Bekanntmachung des Hinweises auf die Patenterteilung: **27.03.1996**
(21) Anmeldenummer: 88117893.3
(22) Anmeldetag: 27.10.1988
(51) Int. Cl.: E21B 17/046, F16D 1/10

(54) **Kupplung, insbesondere für Diamantbohrkrone mit Schaftrohr und Rohrgewindeanschluss**
Connector, especially for diamond core bit with tubular part and threaded connection
Accouplement, notamment pour couronne de forage diamantée, avec partie tubulaire et connexion filetée

(30) Priorität: 27.10.1987 DE 3736302; 21.04.1988 DE 3813472
(43) Veröffentlichungstag der Anmeldung: 03.05.1989
(60) Teilanmeldung: 95112857.8
(73) Patentinhaber: Geissler & Kuper Gesellschaft mit beschränkter Haftung Diamantwerkzeuge, Maschinen, D-29227 Celle (DE)
(72) Erfinder: Geissler, Bernd, 29358 Eicklingen (DE)
(74) Vertreter: Einsel, Robert, Dipl.-Ing.

(56) Entgegenhaltungen:
- BE-A- 660 158
- DE-A- 3 412 249
- DE-B- 1 097 929
- US-A- 2 240 738

## Beschreibung

Die Erfindung betrifft eine Kupplung für ein Gestänge mit Kraftübertragung, insbesondere für Diamantbohrkronen mit Schaftrohr und Rohrgewindeanschluß. Solche Diamantbohrkronen sind bekannt. Sie bestehen im Prinzip aus einem Rohr mit an einer Stirnseite kronenartig befestigten Diamanten, Hartmetallen oder dergleichen. Sie werden insbesondere zum Bohren in Gestein und Beton verwendet. Je nach Anwendungsbereich werden sie im Naß- oder Trockenverfahren betrieben.

Es ist eine Kupplung für Gestänge mit Diamantbohrkronen mit Schaftrohr und Rohrgewindeanschluß bekannt, bei der jedes Kupplungsteil eine senkrecht zur Achse angeordnete Stirnfläche hat und bei der die beiden Stirnflächen zur Erzielung einer dichten und kraftschlüssigen Verbindung fest zusammengedrückt werden.(DE-0S 86 03 499).

Es ist auch ein Vortriebsrohrsatz für den unterirdischen Rohrvortrieb bekannt (DE 3412249 A1), bei dem mit fortschreitendem Bohrvortrieb Rohre miteinander durch Bajonettverschlüsse mit Raststellung verbunden werden und die Rohre durch Sprengringe gesichert werden.

Diese bekannten Kupplungen haben sich zwar für den Bohrbetrieb bewährt, erfüllen aber hinsichtlich der Verbindungsfestigkeit oder der Handhabung nicht alle Wünsche. Auch haben die Gerätschaften wegen der für die Festigkeit der Verbindung und die Kraftschlüssigkeit notwendigen hochfesten und korrosionsstabilen Materialien ein relativ hohes Eigengewicht, das die Handhabung erschwert.

Der Erfindung liegt die Aufgabe zugrunde, eine Anordnung zu schaffen, die leicht gehandhabt werden kann und die eine schnelle, sichere Verbindung der Gestängeteile ermöglicht.

Diese Aufgabe wird durch die in Anspruch 1 gekennzeichnete Erfindung gelöst.

Zur näheren Erläuterung der Erfindung werden im folgenden Ausführungsbeispiele anhand der Zeichnungen beschrieben. Diese zeigen in
- Fig. 1: eine perspektivische Ansicht einer Diamantbohrkrone mit Schaftrohr und einer Kupplung zum Rohrgewindeanschluß
- Fig. 2: eine geschnittene Seitenansicht der miteinander verbundenen Teile gemäß Fig. 1
- Fig. 3: eine teilweise geschnittene Seitenansicht eines mit Nuten versehenen Kupplungsstückes
- Fig. 4: eine andere Seitenansicht der zu kuppelnden Teile.
- Fig. 5: eine Kupplung mit Vertiefungen in dem mit Nuten versehenen Kupplungsstück
- Fig. 6: ein Schaftrohr mit Schraubabschluß
- Fig. 7: eine Weiterbildung der Kupplong.

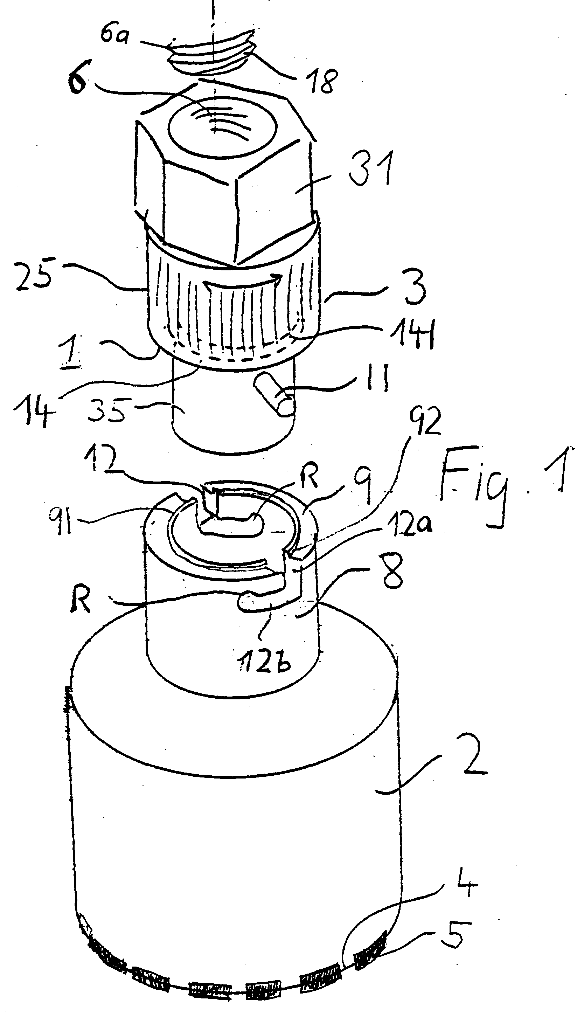

In Fig. 1 ist in perspektivischer Darstellung eine Diamantbohrkrone 1 mit einem Schaftrohr 2 und einem Rohrgewindeanschluß 3 gezeigt. Das Schaftrohr 2 ist an seiner einen Stirnseite 4 kronenartig mit Diamanten 5 versehen. Diese Diamanten 5 können als Stücke eingesetzt und verlötet oder als Beimengung zu einer erhärtenden, die Stirnseite des Schaftrohres bildenden Füllmasse vorgesehen werden. Die Stirnseite kann mit Einschnitten für den Wasserdurchtritt versehen sein. Außerdem kann das Schaftrohr noch mit Öffnungen 7 versehen sein. An der anderen Stirnseite ist das Schaftrohr 2 mit einem Ansatz 8 versehen, der ein erstes Kupplungsteil bildet. Dieser Ansatz ist so ausgebildet, daß er der Flüssigkeit den Durchlauf in das Schaftrohr 2 erlaubt. An der dem Schaftrohr 2 abgewandten Seite des Ansatzes 8 ist eine Fläche 9 vorgesehen, die im wesentlichen senkrecht zur Achse des Schaftrohres 2 angeordnet ist. In der im wesentlichen zylindrischen Wandung des Ansatzes 8 sind diametral gegenüberliegend Nuten 12 angeordnet. Der Rohrgewindeanschluß 3 ist ebenfalls mit einem im wesentlichen zylindrischen Ansatzteil 35 versehen, das als zweites Kupplungsteil dient. Aus diesem Teil 35 ragen senkrecht zur Achsrichtung des Schaftrohres 2 Vorsprünge 11, z.B. Bolzen hervor. Diese Vorsprünge 11 wirken zusammen mit den Nuten 12. Das zylindrische Teil 35 hat einen so bemessenen Außendurchmesser und der Ansatz 8 einen so bemessenen Innendurchmesser, daß das Teil 35 in den Ansatz 8 hineingeschoben werden kann. Die Nuten 12 und die Vorsprünge 11 sind so bemessen, daß die Vorsprünge in die Nuten 12 eingreifen können und von diesen geführt werden. Die Außenwandung des Teiles 35 und die Innenwandung sind gegeneinander abgedichtet, beispielsweise durch einen o-Ring 16 in einer ringförmigen Nut 17. Auf diese Weise wird die Verbindung von Schaftrohr 2 und Rohrgewindeanschluß 3 gegen den Austritt der Kühlflüssigkeit abgedichtet.

Das Schaftrohr 2 und der Rohrgewindeanschluß 3 bilden praktisch ein erstes und ein zweites Kupplungsteil, die beide durch die Vorsprünge 11 und die Nuten 12 leicht kuppelbar sind. Die Kupplung 2,3 ist dabei so beschaffen, daß die beiden Teile 2,3 bei ihrer Verbindung zugleich durch die zwischen Ihnen angeordnete Dichtung 16 abgedichtet werden. Für die Erleichterung der Kupplung weisen die Nuten 12 im Teil 8 einen zunächst etwa in Achsrichtung des Schaftrohres 2 verlaufenden Eingangsteil 12a und dann anschließend einen schräg oder senkrecht zur Achsrichtung verlaufenden Führungs teil 12b auf. Die Richtung von Teil 12b ist so gewählt, daß die Nutwandung bei der Drehung der zu kuppelnden Teile 2,3 den Vorsprung 11 in Richtung auf eine Raste R führt. Die Raste R verhindert, daß sich die beiden so zusammengefügten Teile 2,3 ohne erneute rückläufige Drehung der Teile wieder lösen können. Wenn beispielsweise der Rohrgewindeanschluß 3 ortsfest aufgehängt ist, kann das oft sehr schwere Schaftrohr 2 zur Kupplung angehoben und lose in die Kupplung 3 eingehängt werden. In gleicher Weise können die locker gelösten Kupplungsteile nicht auseinanderfallen, sondern werden besonders aus der Verbindung herausgehoben und abgesenkt. Beim Zusammensetzen der Kupplungsteile 2,3 am Schaftrohr 2 und am Rohrgewindeansatz 3 werden zunächst der Ansatz 8 und das Teil 35 so ineinandergesteckt, daß der oder die Vorsprünge 11 in die Nutenteile 12a eingreifen. Anschließend werden das Schaftrohr 2 und das Teil 3 oder 35 so gegeneinander verdreht, daß sich die Vorsprünge 11 entlang der Nutenteile 12b bewegen bis sie als Endlage die Raste R erreichen. Die raste R wird durch eine Ausdehnung der Nute 12b in Achsrichtung erzielt, vorzugsweise in Richtung auf die Fläche 9. Zur Vollendung der Kupplung ist auf dem Rohrgewindeanschlußteil 3 ein Klemmring 25 so verschiebbar, daß er den Vorsprung 11 fest in die Raste R zieht. Zur Verschiebung ist das Teil 3 mit einem Außengewinde und der Ring 25 mit einem Innengewinde versehen. Die einander zugewandten Flächen 9 des Ansatzes 8 und 14 des Klemmrings 25 sind so angeordnet und bemessen, daß sie fest gegeneinander gedtückt werden und ihre Verbindung abdichten. Es ist aber auch möglich, ein Kupplungsteil ständig am Bohrgerät zu belassen und nur die diversen Schaftrohr auszuwechseln bzw. anzukuppeln. Die so geschaffene, kompakte und dichte Einheit wird in bekannter Weise mit dem Gewindeanschluß 18 des nur angedeuteten Bohrgerätes 19 verbunden. Nach dem Gebrauch werden das Schaftrohr 2 und der Rohrgewindeanschluß wieder voneinander durch Drehung der Teile getrennt. Die Trennung erfordert keine Werkzeuge. Zur Erleichterung der Trennung von evtl stärker verklemmten Teilen kann die Außenseite des Teiles 25 gerändelt sein oder andere Grifferleichterungen aufweisen. Außerdem kann eine Einfräsung F zum Ansetzen von Werkzeugen vorgesehen sein.

Am Innenrand der Fläche 9 sind Vorsprünge 91 in Richtung auf das andere Kupplungsteil angeordnet. Im Klemmring 25 ist der Innenbereich 141 neben der Fläche 14 so geformt oder abgedreht, daß die Vorsprünge 91 in den Klemmring 25 eintauchen können, wenn dieser zur Verklemmung der Flächen 9, 14 bzw. der Bolzen 11 in den Nuten 12 auf den Ansatz 8 zu verddreht wird. Dabei soll zwischen den Vorsprüngen 91 und der Wandung 142 des Bereiches 141 gerade soviel Distanz bleiben, daß die Flächen 142 und 92 sich nicht ohne weiteres berühren. Dadurch wird erreicht, daß die Flächen 141 und 92 nicht zur Zentrierung der Kupplungsteile 2,3 beitragen und diese auch nicht ungünstig beeinflussen können, was beispielsweise geschehen könnte, wenn die beiden Teile nicht mehr genau in Achsrichtung fluchten würden durch den Einfluß der beiden Wandungen 92, 142.

Die Vorsprünge 91 und die entsprechende Form 141 im Klemmring ermöglichen eine geringere Festigkeit der verwendeten Materialien und Abmessungen. Es wird dadurch möglich, statt eines hochfesten Stahls Keramik oder Kunststoff, beispielsweise glasfaserverstärkten Kunststoff GFK oder ein Polyamid der Typen PA 6 oder PA 6,6 oder einen polykristallinen Kunststoff zu verwenden. Vorzugsweise wird ein Kunststoff eingesetzt, wie er bereits als Lagerwerkstoff Verwendung findet. Das sind Kunststoffe, die wenig Wasser aufnehmen und leicht bearbeitbar sind. Während des Betriebes werden über die Kupplung hohe Kräfte übertragen. Dabei können Kräfte eine Verformung des Materials bewirken, beispielsweise radial, in Richtung der Nute 12b oder in Richtung auf das andere Kupplungsteil. Durch die beiden Klemmflächen 9 und 14 werden Verformungen in Richtung auf das andere Kupplungsteil verhindert, da die beiden Flächen unter großem Druck gegeneinander gepreßt werden. Eine Verformung in Richtung der Nute 12b oder in radialer Richtung wird durch die Zusammenwirkung der Vorsprünge 91 und 141 unterbunden, wenn die Verformungen ein vorbestimmtes Maß übersteigen. Dann nämlich liegen die beiden Wandungen gegeneinander.

Um die Wirksamkeit der gegeneinandergedrückten Stirnflächen 9 und 14 zu erhöhen, werden diese Flächen so groß wie möglich gemacht. Zu diesem Zweck wird der Außendurchmesser des Klemmrings 25 im Bereich der Fläche 14 größer bemessen als es der Dicke dieses Klemmrings entspricht.

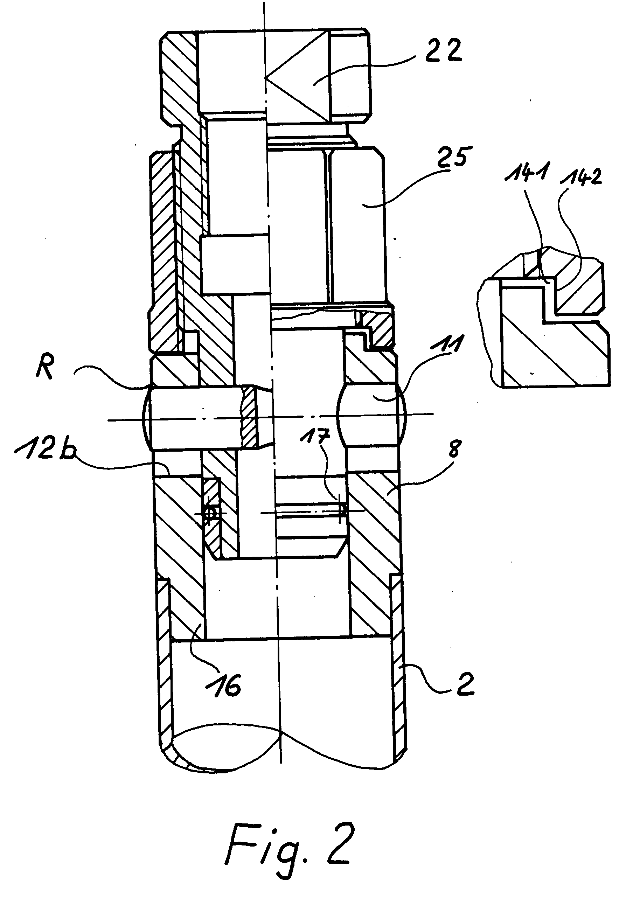

In Fig. 2 ist die geschnittene Seitenansicht eines Schaftrohres 2 mit dem an einem Ende eingesetzten Ansatz 8 und dem angekuppelten Rohrgewindeanschlußteil 3 dargestellt. Deutlich sichtbar ist die Dichtung 16 zwischen dem Ansatz 8 und dem Ansatzteil 35.

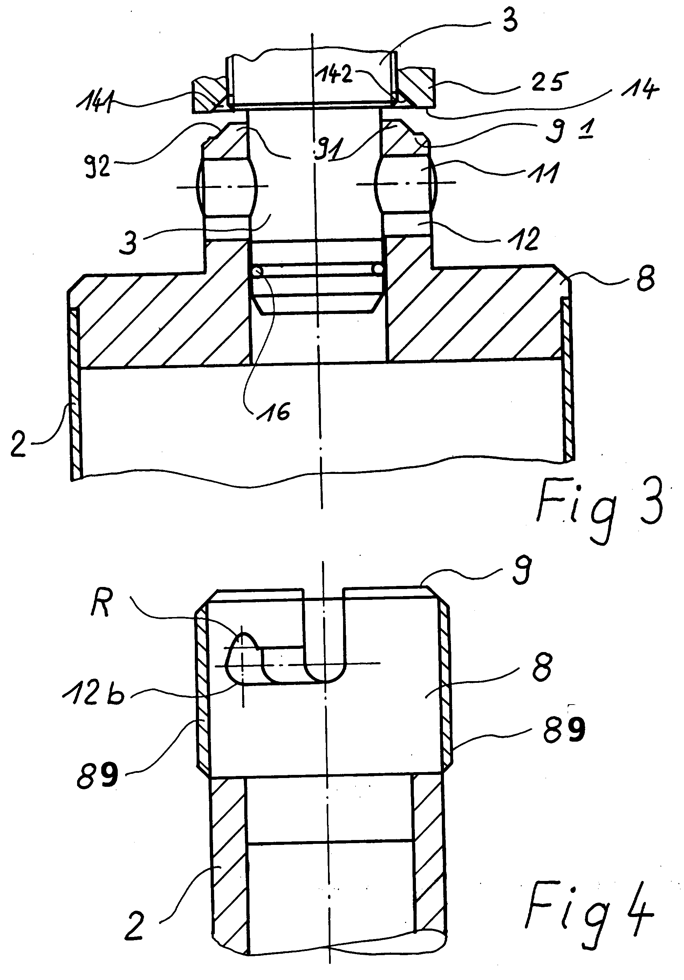

Fig. 3 zeigt die geschnittene Seitenansicht einer Kupplung. Abweichend von der in Fig. 2 dargestellten Kupplung ist hier der Vorsprung 91 mit einem etwa trapezförmigen Profil ausgebildet.

In Fig. 4 ist eine Weiterbildung der Kupplungen nach Fig. 1 - Fig. 3 für die Übertragung besonders großer Kräfte dargestellt. Bei dieser Weiterbildung ist der Kunststoffkörper 8 von einer dünnen, die Haltbarkeit steigernden Metallhülse 89 umgeben, die aufgeschrumpft und/oder aufgeklebt ist.

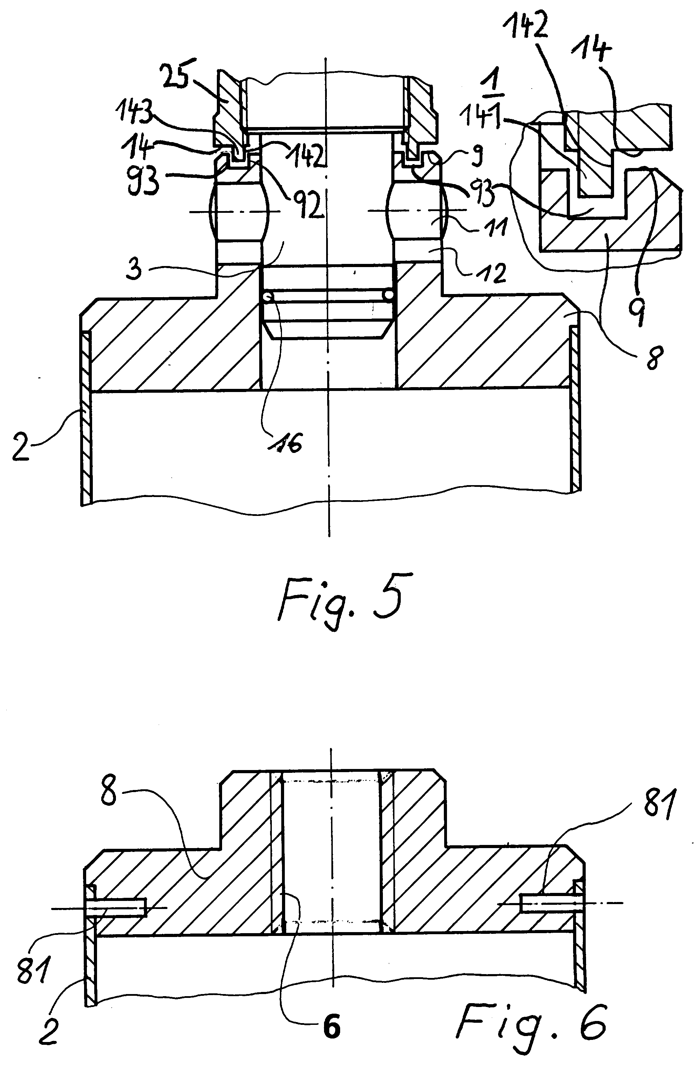

Fig. 5 zeigt eine Kupplung mit Vertiefungen 93 in dem die Nuten 12 tragenden Kupplungsstück 8. Diese Vertiefungen 93 können rechteckförmig oder trapezförmig ausgebildet sein und als einzelne Vertiefungen oder als Nuten ausgebildet sein. Nuten haben sich als besonders geeignet erwiesen. In die Nuten 93 greifen gratförmige Vorsprünge 144 des Klemmrings 25 ein. Auch hier ist dafür Sorge getragen, daß die Wandungen der Vorsprünge und Nuten sich ohne zusätzliche Verformungen nach der Verkupplung nicht berühren.

Die vorstehend anhand der Figuren beschriebene Kupplung kann als Teil der Gestängerohre verwendet werden. Die Kupplungsteile können aber auch als gesonderte Bauteile vielseitig eingesetzt werden.

In Fig. 6 ist ein Schaftrohr 2 mit einem Kupplungsstück 8 dargestellt, das in das Schaftrohr 2 eingepaßt, mit diesem mittels eines hochfesten Klebers verklebt und zusätzlich mittels Nieten 81, Schrauben oder dergl.verbunden ist. Das Kupplungsteil 8 ist mit einem Gewinde 821 versehen, das zur Aufnahme üblicher Rohranschlußgewindeteile ausgebildet ist.

Die Verwendung der Kupplungsteile aus Kunststoff führt zu einer wesentlichen Verringerung der Bohrgeräusche.

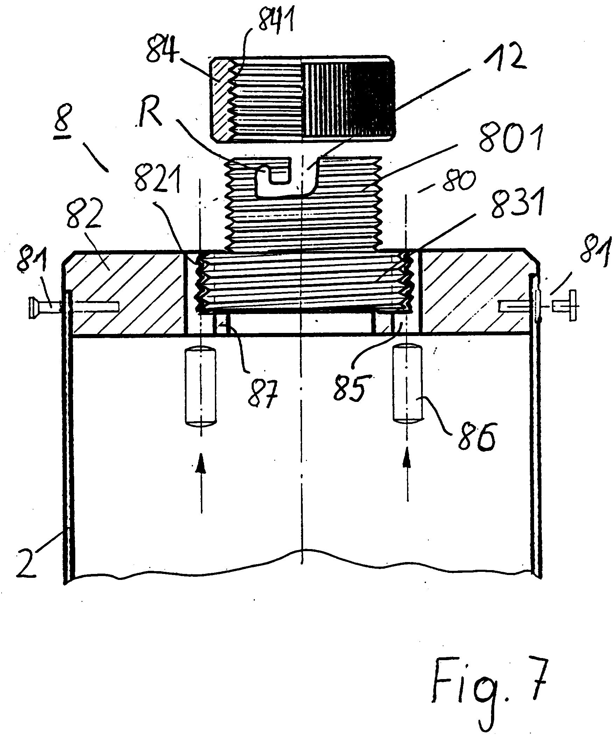

In Fig. 7 ist ein Ausführungsbeispiel der Kupplung 8 dargestellt, bei dem ein Kupplungsteil 82 im wesentlichen scheibenförmig ausgebildet und durch Aufschrumpfen und/oder Kleben und/oder Vernieten oder Verschrauben mit dem Gestänge 2 fest verbunden ist. Gestänge 2 unterschiedlicher Durchmesser sind mit entsprechend an - gepaßten Kupplungsteilen 82 versehen. Im Kupplungsteil 82 ist eine zum Gestänge koaxiale Bohrung mit Innengewinde 821 vorgesehen. In diese Gewindebohrung 821 ist ein rohrförmiges Kupplungsteil 80 einschraubbar und mittels eines Anschlages 87 und/oder durch Bohrungen 85 und Bolzen 86 arretierbar. Die Bohrungen 85 durchdringen sowohl die Gewindebohrung 821 als auch das Kupplungsstück 80. Das Gewinde der Gewindebohrung ist relativ steil und grob, um ein Festfressen während des Betriebes mit großer Kraftübertragung zu vermeiden.

Das rohrförmige Kupplungsstück 80 ragt mit einem Teil seiner Länge über den stirnseitigen Abschluß des Gestängeteils 2 hinaus und ist in diesem Bereich mit dem Kupplungsteil 3 aus Fig. 1 kuppelbar. Das Kupplungsstück 80 ist mit Nuten 12 und ggf mit einer Raststellung R für die Aufnahme des Kupplungsteiles 3 mit seinen Vorsprüngen 11 versehen. Um eine Verformung des durch die Nuten 12 oder dergl. geschwächten Randbereichs des Kupplungsstückes zu vermeiden, ist die Außenseite des Kupplungsstückes 80 wenigstens im Bereich der Nuten 12 mit einem Gewinde 801 versehen, auf das ein Ring 81 mit entsprechendem Innengewinde 811 aufschraubbar ist. Dieser Ring 81 gibt dadurch jeder Windung des Gewindes 801 Halt und bewirkt eine Stabilisierung des Randbereichs. Der Durchmesser des Ringes 81 ist so gewählt, daß er über die bereits eingebaute Kupplung 3 geführt werden kann.

Die Teile 80, 801, 82, 83 sowie der Ring 84 in Fig. 7 sind aus einem Kunststoff, insbesondere aus einem Gußpolyamid PA6 oder PA6,6 gefertigt. Durch kegelförmige Ausbildung der Gewinde 801 und 811 läßt sich die Verbindung der Teile vereinfachen und das Auswechselverfahren beschleunigen. Die Bolzen 11 und 86 sind vorzugsweise aus Metall gefertigt. Die Verbindungsstifte 81 können Schrauben oder Nieten sein. Vor der Verbindung der Teile 2 und 82 wird das Gestängeteil 2 erhitzt und das Abschlußteil 82 gekühlt. Nach dem Aufschrumpfen ggf in Verbindung mit einem Verkleben der benachbarten Flächen und den genannten Nieten 81 kann diese Verbindung auch sehr hohe Kräfte übertragen.

Bei einer bevorzugten Ausführungsform der Kupplung sind die für das Kuppeln wirksamen Teile aus Kunststoff, insbesondere der vorstehend genannten Materialien, gefertigt. Lediglich für das mit den Schneidelementen versehene Rohr 2 und für die Bolzen 11 haben sich Metalle bewährt. Ein wesentlicher Teil der dadurch bewirkten Vorteile wie Geräuschverringerung und Gewichtsersparnis sowie die beim Betrieb damit verbundene Sicherheit wird durch die in das Rohr 2 eingesetzte Scheibe 8 bzw. 82 aus Kunststoff erzielt, die insbesondere bei großen Durchmessern der Rohre 2 zu einer stabilen Lage des Werkzeugs beim Bohren beiträgt.

## Patentansprüche

1. Kupplung für Gestänge mit Kraftübertragung, bei der von zwei miteinander zu kuppelnden Teilen (3,8) das eine Vorsprünge, Bolzen oder dergl. aufweist und das andere Nuten (12) mit einer Raststellung für die Vorsprünge, Bolzen oder dergl., und bei der beide Kupplungsteile Stirnflächen senkrecht zur Gestängeachse haben, die im gekuppelten Zustand flächig so gegeneinandergedrückt-sind, daß die Vorsprünge, Bolzen oder dergl. in der Raststellung kraftschlüssig verklemmt sind, dadurch gekennzeichnet, daß das die Nuten (12) aufweisende Kupplungsteil (8) an der Innenseite der Stirnfläche (9)mit Vorsprüngen (91) oder Vertiefungen (93) in Richtung der Achse versehen sind, und daß das mit Vorsprüngen, Bolzen oder dergl versehene Kupplungsteil (3) so geformt ist, daß es im gekuppelten Zustand eine Wandung (92, 142) der Vorsprünge (91) oder Vertiefungen (93) des anderen Kupplungsteils (8) umfaßt.

2. Kupplung nach Anspruch 1, dadurch gekennzeichnet, daß die Vorsprünge (91) in Achsrichtung durch einen umlaufenden Grat (91) und die Vertiefungen (93) durch eine Nut (93) gebildet werden.

3. Kupplung nach Anspruch 2, dadurch gekennzeichnet, daß der Grat (91) und/oder die Nut (93) ein im wesentlichen rechteckigförmiges Profil haben.

4. Kupplung nach Anspruch 2, dadurch gekennzeichnet, daß der Grat (91) und/oder die Nut (93) ein im wesentlichen trapezförmiges Profil haben.

5. Kupplung nach einem der Ansprüche 1-4, dadurch gekennzeichnet, daß auf dem die Vorsprünge, Bolzen oder dergl.(11) tragenden Kupplungsteil (3) ein mit Schraubgewinde versehener Klemmring (25) angeordnet ist, dessen vordere Stirnseite die Klemmfläche (14) bildet und der im Bereich seiner Stirnseite (14) so ausgebildet ist, daß eine zur Achse hin gerichtete Wandung (142) die Vorsprünge oder Vertiefungen (93) bzw. den Grat (91) oder die Nuten (93) umschließt.

6. Kupplung nach Anspruch 5, dadurch gekennzeichnet, daß ohne Verformung des die Nuten (12) aufweisenden Kupplungsteils (8) zwischen dem Grat (91) oder der Nute (93) und der Wandung (142) des Klemmrings (25) ein solcher Abstand vorgesehen ist, daß Grat (91) oder Nute (93) und Wandung (142) keine Berührung haben.

7. Kupplung nach einem der Ansprüche 1-6, dadurch gekennzeichnet, daß die Stirnfläche (14) des Klemmringes größer ausgebildet ist als eine Querschnittsfläche des Klemmringes (25) im Gewindebereich.

8. Kupplung für Gestänge mit Kraftübertragung, nach einem der Ansprüche 1-7, dadurch gekennzeichnet, daß das die Nuten aufweisende Kupplungsteil (8) und/oder das die Vorsprünge (11) aufweisende Kupplungsstück (3) ganz oder teilweise aus einem leichten, Nichteisen-Material besteht.

9. Kupplung nach Anspruch 8, dadurch gekennzeichnet, daß das Material Kunststoff ist.

10. Kupplung nach Anspruch 9, dadurch gekennzeichnet, daß das Material ein glasfaserverstärkter Kunststoff (GFK) ist.

11. Kupplung nach Anspruch 9, dadurch gekennzeichnet, daß das Material ein Polyamid ist, insbesondere der Type PA 6 oder PA 6,6.

12. Kupplung nach Anspruch 9, dadurch gekennzeichnet, daß das Material polykristallin ist.

13. Kupplung nach einem der Ansprüche 8-11, dadurch gekennzeichnet, daß der Klemmring (25) aus einem der genannten Materialien besteht.

14. Kupplung für Bohrgestänge mit einem die Bohrkrone tragenden Rohr (2), das an seinem der Bohrkrone abgewandten Ende mit einem Kupplungsteil (8) zu einer Einheit verbunden ist, dadurch gekennzeichnet, daßdas Kupplungsteil (8) aus einem der Materialien nach Ansprüche 8-12 besteht, daß das Kupplungsteil (8) mit dem Rohr (2) mittels eines hochfesten Klebers verklebt ist.

15. Kupplung nach Anspruch 14, dadurch gekennzeichnet, daß das Kupplungsteil (8) mit Mitteln (9,11,12,14) zur Schnellkupplung oder mit einem Gewinde für die Aufnahme eines Rohrgewindestücks versehen ist.

16. Kupplung für rohrförmige Gestänge mit Kraftübertragung, bei dem ein erstes Kupplungsteil (8) einen stirnseitigen Abschluß des Gestänges (2), insbesondere des Schaftes einer Diamantbohrkrone, bildet und das andere Kupplungsteil (3) in das erste Kupplungsteil (8) einsteckbar ist, dadurch gekennzeichnet, daß das erste Kupplungsteil (8) ein der Kupplung dienendes, über das Gestänge (2) in Achsrichtung hinausragendes rohrförmiges Stück (80) aufweist und daß das rohrförmige Stück (80) von einer Hülse (81) umfaßt ist.

17. Kupplung nach Anspruch 1, dadurch gekennzeichnet, daß die Hülse (81) auf dem Umfang des rohrförmigen Stückes (80) aufgeschrumpft und/oder aufgeklebt ist.

18. Kupplung nach einem der Ansprüche 1 -17, dadurch gekennzeichnet, daß
a) von den beiden miteinander zu kuppelnden Teilen (3,8,80) das eine (3) Vorsprünge, Bolzen oder dergl. (11) aufweist und das andere (80) Nuten (12) für die Aufnahme der Vorsprünge, Bolzen oder dergl. (11),
b) die Nuten (12) im rohrförmigen Stück (80) angeordnet sind und daß das rohrförmige Stück (80) zur Bildung des Kupplungsteiles (8) durch Schraubverbindung (821,831) mit einem im wesentlichen scheibenförmigen Abschlußteil (82) des Gestänges (2) verbindbar ist.
c) ein Ring (81) mit einem Innengewinde (811) vorgesehen ist, der auf das Außengewinde (801) des rohrförmigen Stückes schraubbar ist und das rohrförmige Stück (80) wenigstens im Bereich der Nuten (12) umschließt.

## Claims

1. Coupling for rods with power transmission, wherein, of two parts (3, 8) to be coupled to one another, the one has projections, pins or the like and the other has slots (12) with a detent position for the projections, pins or the like, and wherein both coupling parts have end faces at right angles to the column axis, which in the coupled state are pressed flat against one another in such a way that the projections, pins or the like are jammed in a force-locking manner in the detent position, characterized in that the coupling part (8) having the slots (12) is provided at the inside of the end face (9) with axially directed projections (91) or recesses (93), and that the coupling part (3) provided with projections, pins or the like is shaped in such a manner that, in the coupled state, it embraces a wall (92, 142) of the projections (91) or recesses (93) of the other coupling part (8).

2. Coupling according to claim 1, characterized in that the projections (91) are formed in an axial direction by a circumferential burr (91) and the recesses (93) are formed by a slot (93).

3. Coupling according to claim 2, characterized in that the burr (91) and/or the slot (93) have a substantially rectangular profile.

4. Coupling according to claim 2, characterized in that the burr (91) and/or the slot (93) have a substantially trapezoidal profile.

5. Coupling according to one of claims 1 to 4, characterized in that disposed on the coupling part (3) carrying the projections, pins or the like (11) is a clamping ring (25) which is provided with a screw thread, whose front end face forms the clamping surface (14) and which in the region of its end face (14) is constructed in such a way that a wall (142) directed towards the axis encloses the projections or recesses (93) or the burr (91) or the slots (93).

6. Coupling according to claim 5, characterized in that in the absence of deformation of the coupling part (8) having the slots (12), such a distance is provided between the burr (91) or the slot (93) and the wall (142) of the clamping ring (25) that burr (91) or slot (93) and wall (142) do not touch one another.

7. Coupling according to one of claims 1 to 6, characterized in that the end face (14) of the clamping ring is made larger than a cross-sectional surface of the clamping ring (25) in the threaded region.

8. Coupling for columns with power transmission according to one of claims 1 to 7, characterized in that the coupling part (8) having the slots and/or the coupling piece (3) having the projections (11) is made entirely or partially of a lightweight non-ferrous material.

9. Coupling according to claim 8, characterized in that the material is a plastic material.

10. Coupling according to claim 9, characterized in that the material is a glass-fibre-reinforced plastic material (GFP).

11. Coupling according to claim 9, characterized in that the material is a polyamide, in particular of the type PA 6 or PA 6.6.

12. Coupling according to claim 9, characterized in that the material is polycrystalline.

13. Coupling according to one of claims 8 to 11, characterized in that the clamping ring (25) is made of one of the named materials.

14. Coupling for drill rods having a tube (2), which carries the drill bit and is connected at its end remote from the drill bit to a coupling part (8) to form a unit, characterized in that the coupling part (8) is made of one of the materials according to claims 8 to 12, that the coupling part (8) is bonded to the tube (2) by means of a high-strength adhesive.

15. Coupling according to claim 14, characterized in that the coupling part (8) is provided with quick coupling means (9, 11, 12, 14) or with a thread for receiving a tubular threaded piece.

16. Coupling for hollow rods with power transmission, wherein a first coupling part (8) forms a front end of the rod (2), in particular of the shank of a diamond drill bit, and the other coupling part (3) is insertable into the first coupling part (8), characterized in that the first coupling part (8) has a tubular piece (80), which projects axially beyond the rod (2) and is used for coupling, and that the tubular piece (80) is embraced by a sleeve (81).

17. Coupling according to claim 1, characterized in that the sleeve (81) is shrunk and/or bonded on the periphery of the tubular piece (80).

18. Coupling according to one of claims 1 - 17, characterized in that
a) of the said two parts to be coupled to one another (3,8,80), the one (3) has projections, pins or the like (11) and the other (80) has slots (12) for the projections, pins or the like (11),
b) the slots (12) are provided in the tubular piece (80) and that the tubular piece (80) is connectable to a substantially disc-shaped end piece (82) of the rod (2) by means of screw thread (821,831),
c) a ring (81) is provided having an inside screw thread which ring can be screwed onto an outside screw thread (801) of the tubular piece (80) and encloses the tubular piece (80) at least in the area of the slots.

## Revendications

1. Accouplement pour des tiges à transmission des forces, dans lequel, parmi deux éléments à accoupler entre eux (3, 8), l'un d'eux présente des parties en saillie ou des goujons ou similaires et l'autre présente des rainures (12) pourvues d'une position d'encliquetage et destinées aux parties en saillie ou aux goujons ou similaires, et dans lequel les deux éléments de l'accouplement comportent des surfaces frontales qui sont perpendiculaires à l'axe des tiges et qui sont serrées l'une contre l'autre par leurs surfaces planes à l'état accouplé d'une manière telle que les parties en saillie ou les goujons ou similaires soient bloqués par conjugaison des forces dans la position d'encliquetage, caractérisé par le fait que l'élément (8) de l'accouplement qui présente les rainures (12) est pourvu, sur le côté intérieur de la surface frontale (9), de parties en saillie (91) ou de renfoncements (93) dans la direction de l'axe, et par le fait que l'élément (3) de l'accouplement qui est pourvu de parties en saillie ou de goujons ou similaires est conformé d'une manière telle qu'il entoure à l'état accouplé une paroi (92, 142) des parties en saillie (91) ou des renfoncements (93) de l'autre élément (8) de l'accouplement.

2. Accouplement selon la revendication 1, caractérisé par le fait que les parties en saillie (91) dans la direction de l'axe sont constituées par une nervure annulaire (91), et que les renfoncements (93) sont constitués par une rainure (93).

3. Accouplement selon la revendication 2, caractérisé par le fait que la nervure (91) et/ou la rainure (93) présente un profil qui est rectangulaire pour l'essentiel.

4. Accouplement selon la revendication 2, caractérisé par le fait que la nervure (91) et/ou la rainure (93) présente un profil qui est trapézoïdal pour l'essentiel.

5. Accouplement selon l'une des revendications 1 à 4, caractérisé par le fait que sur l'élément (3) de l'accouplement qui porte les parties en saillie ou les goujons ou similaires (11) est disposée une bague de serrage (25) qui est pourvue d'un filetage de vissage, dont le côté frontal avant constitue la surface de serrage (14) et qui est constituée dans la région de sa surface frontale (14) d'une manière telle qu'une paroi (142) dirigée vers l'axe entoure les parties en saillie ou les renfoncements (93) ou, respectivement, la nervure (91) ou la rainure (93).

6. Accouplement selon la revendication 5, caractérisé par le fait que, sans déformation de l'élément (8) de l'accouplement qui présente les rainures (12), il est prévu entre la nervure (91) ou la rainure (93) et la paroi (142) de la bague de serrage (25) une distance telle que la nervure (91) ou la rainure (93) et la paroi (142) ne soient pas en contact.

7. Accouplement selon l'une des revendications 1 à 6, caractérisé par le fait que la surface frontale (14) de la bague de serrage est plus grande qu'une surface en section transversale de la bague de serrage (25) dans la région du filetage.

8. Accouplement pour des tiges à transmission des forces selon l'une des revendications 1 à 7, caractérisé par le fait que l'élément (8) de l'accouplement qui présente les rainures et/ou l'élément (3) de l'accouplement qui présente les parties en saillie (11) est constitué totalement ou partiellement par un matériau léger non ferreux.

9. Accouplement selon la revendication 8, caractérisé par le fait que le matériau est de la matière plastique.

10. Accouplement selon la revendication 9, caractérisé par le fait que le matériau est de la matière plastique renforcée par des fibres de verre.

11. Accouplement selon la revendication 9, caractérisé par le fait que le matériau est un polyamide, en particulier du type PA 6 ou PA 6,6.

12. Accouplement selon la revendication 9, caractérisé par le fait que le matériau est polycristallin.

13. Accouplement selon l'une des revendications 8 à 11, caractérisé par le fait que la bague de serrage (25) est constituée par l'un desdits matériaux.

14. Accouplement pour tiges de forage, comprenant un tube (2) qui porte la couronne de forage et qui est relié, à son extrémité opposée à la couronne de forage, à un élément (8) de l'accouplement pour former un ensemble, caractérisé par le fait que l'élément (8) de l'accouplement est constitué par l'un des matériaux selon les revendications 8 à 12, et par le fait que l'élément (8) de l'accouplement est collé au tube (2) au moyen d'une colle à haute résistance.

15. Accouplement selon la revendication 14, caractérisé par le fait que l'élément (8) de l'accouplement est pourvu de moyens d'accouplement rapide (9, 11, 12, 14) ou d'un filetage destiné à recevoir une partie filetée du tube.

16. Accouplement pour tiges de forage à transmission des forces, dans lequel un premier élément (8) de l'accouplement constitue une terminaison frontale de la tige (2), et en particulier de la tige d'une couronne de forage diamantée, et l'autre élément (3) de l'accouplement peut être enfoncé dans l'élément (8) de l'accouplement, caractérisé par le fait que le premier élément (8) de l'accouplement présente une partie tubulaire (80) qui sert à l'accouplement et qui fait saillie au-delà de la tige (2) dans la direction de l'axe, et par le fait que la partie tubulaire (80) est entourée par un manchon (81).

17. Accouplement selon la revendication 1, caractérisé par le fait que le manchon (81) est fretté et/ou collé sur le pourtour de la partie tubulaire (80).

18. Accouplement selon l'une des revendications 1 à 17, caractérisé par le fait que :
a) parmi les deux éléments à accoupler entre eux (3, 8. 80), l'un (3) présente des parties en saillie ou des goujons ou similaires (11) et l'autre (80) présente des rainures (12) qui sont destinées à recevoir les parties en saillie ou les goujons ou similaires (11),
b) les rainures (12) sont disposées dans la partie tubulaire (80), et, en vue de la formation de la partie d'accouplement (8) par liaison par vissage (821, 831), la partie tubulaire (80) peut être reliée à une partie de fermeture (82), pour l'essentiel en forme de disque, de la tige (2),
c) il est prévu une bague (84) qui est pourvue d'un filetage intérieur (811), qui peut être vissée sur le filetage extérieur (801) de la partie tubulaire et qui entoure la partie tubulaire (80), du moins dans la région des rainures (12).
